# EUROPEAN PATENT APPLICATION

(11) **EP 0 834 683 A1**
(43) Date of publication of application: **08.04.1998**
(21) Application number: 97117148.3
(22) Date of filing: 02.10.1997
(51) Int. Cl.: F16H 61/18

(54) **Vehicle transmission control device**

(30) Priority: 04.10.1996 IT TO960809
(71) Applicant: ROLTRA MORSE S.p.A., 86077 Pozzilli (IT)
(72) Inventor: Ottino, Franco Giovanni, 56017 San Giuliano Terme (IT)
(74) Representative: Franzolin, Luigi

(57) **Abstract**

A control device (1) for a vehicle transmission, having a fixed supporting element (2); a gear lever (6) connected to the supporting element (2) so as to rotate about a first and a second axis (A, C) substantially perpendicular to each other; and a first and a second engaging element (42, 34) located respectively on the gear lever (6) and the supporting element (2), and connectable to each other to permit the gear lever (6) to be positioned and maintained in a reverse gear plane (π₄) through the first axis (A); the device also having flexible means (57, 59) interposed between the first engaging element (42) and the gear lever (6), and which, when the gear lever (6) is positioned in the reverse gear plane (π₄), permit accidental forcing of the gear lever (6) in a forcing direction crosswise to the reverse gear plane (π₄), while maintaining the engaging elements (42, 34) connected to each other.

## Description

The present invention relates to a vehicle transmission control device or, more simply, to a shift control device.

Shift control devices are known, which substantially comprise a supporting element fitted to a vehicle body element; an intermediate element rotating with respect to the supporting element about a first axis of rotation; and a gear lever fitted to the intermediate element and rotating with respect to the intermediate element about a pin defining a second axis perpendicular to the first. Rotation of the gear lever about the first and second axis is transmitted to the transmission by respective relay members to respectively control gear selection and engagement.

Known devices conveniently comprise a disabling element for preventing the reverse gear from being engaged accidentally, and which is fitted to the gear lever so as to slide axially between a lowered disabling position and a raised enabling position, is maintained in the lowered position by elastic means interposed between itself and the gear lever, and comprises a tooth, which, in the raised position of the disabling element, engages a groove formed in the supporting element to permit the gear lever to be positioned and maintained in a reverse gear selection plane or, more simply, reverse gear plane.

When the gear lever is positioned in the reverse gear plane, the tooth engaged inside the groove prevents the gear lever from being forced transversely, or from slipping as a result of the inevitable clearances of the transmission, into an adjacent selection plane while the transmission is still set to reverse gear, and possibly remaining locked in the undesired position.

When the gear lever is positioned in reverse, however, any sharp movements or forcing of the lever in a direction perpendicular to the reverse gear plane may overload and break the tooth.

One possible solution to the above drawback is to reinforce the tooth by increasing its thickness. However, the inevitably small distance between the reverse gear plane and the adjacent gear selection plane poses a strict limit to the maximum tooth thickness achievable.

It is an object of the present invention to provide a shift control device designed to overcome the aforementioned drawbacks typically associated with known devices.

According to the present invention, there is provided a control device for a vehicle transmission, comprising:
- supporting means fittable to a vehicle body;
- a gear lever connected to said supporting means so as to rotate at least about a first and a second axis substantially perpendicular to each other to respectively select and engage/disengage a gear;
- a first and a second engaging element located respectively on said gear lever and said supporting means, and connectable to each other to permit said gear lever to be positioned in a reverse gear plane through said first axis, and to maintain said gear lever in said plane;
   characterized by comprising flexible means interposed between said first engaging element and said gear lever, and which, when said gear lever is positioned in said reverse gear plane, permit accidental forcing of the gear lever in a forcing direction crosswise to said plane, while maintaining said engaging elements connected to each other.

A preferred, non-limiting embodiment of the present invention will be described by way of example with reference to the accompanying drawings, in which:
Figure 1 shows a partially sectioned front view, with parts removed for clarity, of a shift control device in accordance with the present invention;
Figure 2 shows a partially sectioned front view of the Figure 1 device in a different operating position;
Figure 3 shows a larger-scale section, with parts removed for clarity, along line III-III in Figure 1;
Figure 4 shows a section, with parts removed for clarity, along line IV-IV in Figure 2;
Figure 5 shows a section, with parts removed for clarity, along line IV-IV in Figure 2 and in a different operating position.

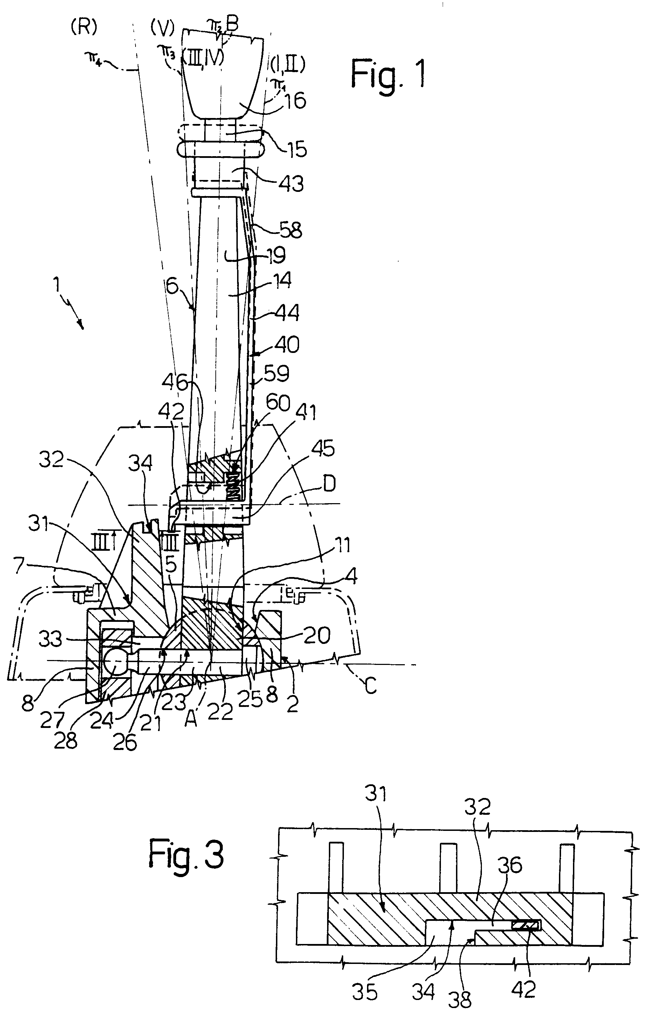

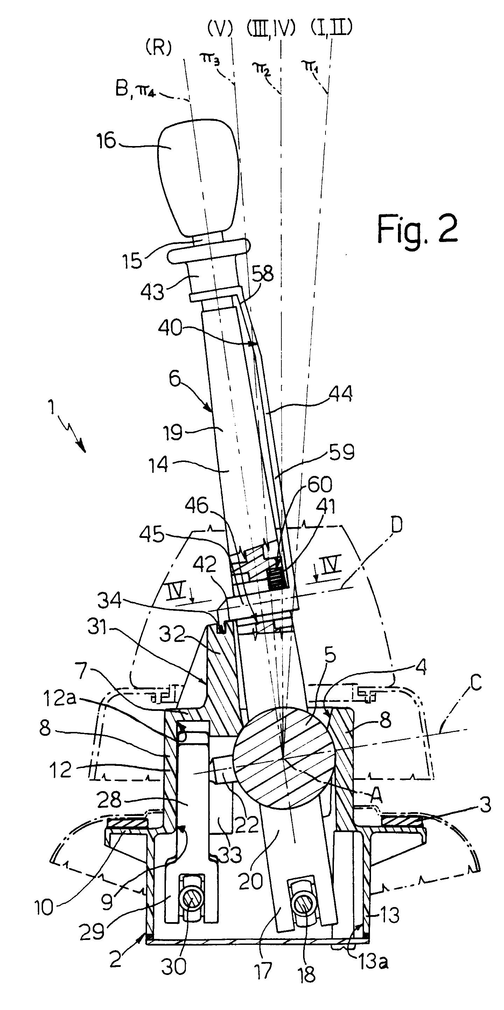

Number 1 in Figures 1 and 2 indicates a control device for a vehicle transmission (not shown).

Device 1 substantially comprises a fixed, substantially box-shaped supporting element 2 fittable rigidly to a vehicle body element 3 and having a top opening 4; an intermediate element 5 housed inside supporting element 2 at opening 4 and hinged to supporting element 2 about an axis A substantially longitudinal with respect to the vehicle; and a gear lever 6 having an axis B perpendicular to axis A, extending loosely through opening 4, fitted to intermediate element 5, and rotating with respect to intermediate element 5 about an axis C perpendicular to axes A, B and crosswise with respect to the vehicle.

Lever 6 therefore rotates, with respect to fixed supporting element 2, about axis A (fixed) and about axis C (movable with intermediate element 5) to respectively select a gear and engage/disengage the selected gear. More specifically, when rotated about axis A, lever 6 is positioned in a number of gear selection planes π₁, π₂, π₃ and π₄, each of which is associated with a gear or pair of consecutive gears. In the example shown relative to a five-gear transmission, plane π₁ is associated with gears I and II, plane π₂ with gears III and IV, plane π₃ with gear V, and plane π₄ with reverse gear R. Hereinafter, plane π₄ is referred to simply as the reverse gear plane. Planes π₁, π₂, π₃ and π₄ all extend through axis A; and operation of lever 6 is transmitted to the transmission (not shown) by relay means described later on.

Supporting element 2 comprises a flange 10 for fitment to body 3 and having, at an end portion, a substantially rectangular through opening 9; a substantially tubular top body 12 extending upwards from the edges of opening 9; and a bottom body 13 extending downwards from flange 10 and elongated in the direction of axis A.

Body 12 comprises a number of lateral walls 8 extending upwards from respective edges of opening 9; and a top wall 7 substantially in the form of a frame and defining opening 4. Walls 7 and 8 define a first cavity 12a communicating externally at the top through opening 4; and body 13 defines internally a second cavity 13a communicating with cavity 12a through opening 9.

Intermediate element 5 is substantially cylindrical and of axis A, is housed inside cavity 12a, and is hinged by respective end pins (not shown) to respective walls 8, transverse with respect to the vehicle, of supporting element 2.

Lever 6 comprises a rod 14, of axis B, which is fitted through a through opening 11, of axis B, formed in intermediate element 5, and in turn comprises a top end 15 fitted integrally with a knob 16, and a substantially fork-shaped bottom end 17 housed inside cavity 13a and hinged to a gear engagement/disengagement control cable 18.

Rod 14 has a ribbed structure with a substantially H-shaped cross section, and comprises a top portion 19 tapering towards knob 16, and a bottom portion 20 housed in sliding manner with a small amount of lateral clearance inside opening 11, and comprising a through hole 21, of axis C, defining a seat for a pin 22 permitting rotation with respect to intermediate element 5 (Figure 1).

Pin 22 comprises an intermediate portion 23 engaging hole 21 of lever 6 interferentially so as to be rigidly connected to lever 6; and opposite axial end portions 24, 25 engaging in radially slack manner a hole 26, of axis C, formed in intermediate element 5 and intersecting opening 11.

Portion 24 extends axially outwards of intermediate element 5 to form a spherical end head 27, which acts as an articulating element for controlling a relay lever 28 in the form of a quadrant.

Lever 28 is hinged to a respective wall 8 of supporting element 2 about an axis (not shown) perpendicular to axis A and shifted rearwards with respect to axis C, and comprises a substantially fork-shaped bottom end portion 29 housed inside cavity 13a and hinged to a gear selection control cable 30.

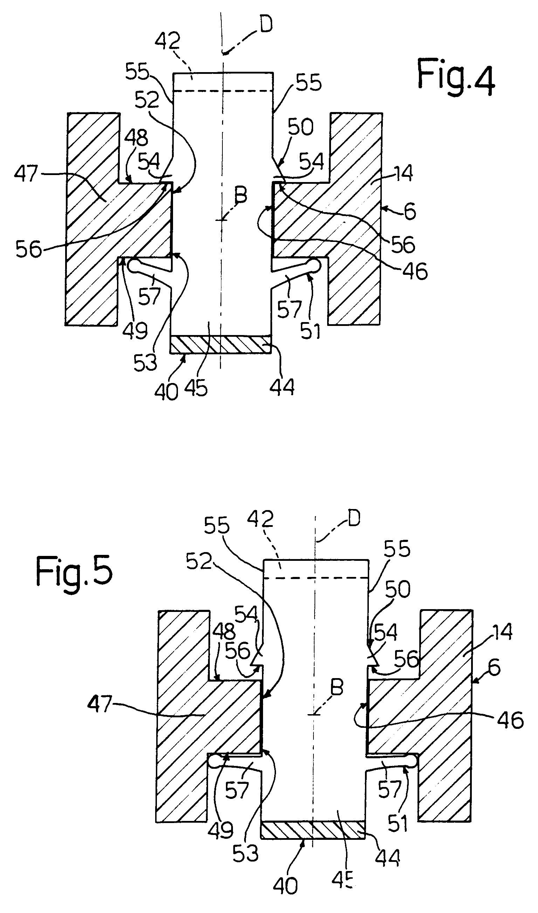

Supporting element 2 also comprises a longitudinal wall 31 projecting transversely from wall 7 at a respective longitudinal edge of opening 4, and comprising a top portion 32 outside supporting element 2, and a bottom portion 33 housed inside cavity 12a. At the top, portion 32 comprises a substantially L-shaped groove 34 (Figure 3) for the purpose described later on.

Groove 34 comprises a first portion 35 substantially perpendicular to plane π₄ and communicating externally through an opening 38 facing rod 14; and a second portion 36 perpendicular to portion 35 and parallel to plane π₄.

Device 1 also comprises a disabling element 40 for preventing accidental engagement of reverse gear R, and which is fitted to rod 14 so as to slide axially between a lowered disabling position and a raised enabling position, and is maintained in the disabling position by a coil spring 41 interposed between rod 14 and element 40 itself.

Element 40 comprises a tooth 42, which is selectively inserted inside portion 35 of groove 34 to permit lever 6 to be positioned in plane π₄, and engages portion 36 of groove 34 to maintain lever 6 in plane π₄. More specifically, in the lowered disabling position of element 40 and when lever 6 is rotated about axis A towards plane π₄, tooth 42 interferes with a respective edge of opening 38 of groove 34 to prevent lever 6 from being positioned in plane π₄. Conversely, in the raised enabling position of element 40 and close to wall 31, tooth 42 is aligned with opening 38, so that successive rotations of lever 6 about axes A and C respectively insert tooth 42 inside portion 35 of groove 34, and engage tooth 42 inside portion 36 of groove 34.

Element 40 comprises an actuating collar 43 fitted in axially sliding manner to portion 19 of rod 14 and adjacent to knob 16; an elongated arm 44 integral with collar 43 and extending laterally from collar 43 along portion 19 of rod 14; and a body 45 comprising a substantially flat rectangular plate, and which projects integrally and perpendicularly from the end of arm 44 opposite collar 43, and comprises tooth 42 on the free end.

With reference in particular to Figures 4 and 5, body 45 is fitted in laterally sliding manner through a transverse through opening 46 having an axis D perpendicular to axis B, and formed in a substantially flat portion 47 forming part of the ribbed structure of rod 14; and body 45 is housed inside opening 46 with sufficient clearance (Figure 1) in the direction of axis B to permit element 40 to slide between said disabling and enabling positions.

Portion 47 is defined towards wall 31 by a substantially flat surface 48, and on the opposite side by a substantially flat surface 49.

Body 45 is retained inside opening 46 by first and second unilateral stop means 50, 51 respectively cooperating with and contacting surfaces 48, 49 of portion 47.

More specifically, first stop means 50 comprise a pair of triangular projections 54 projecting from respective lateral edges 55 of body 45, and which snap beyond surface 48 when body 45 is fitted through opening 46. Projections 54 comprise respective contact edges 56 cooperating with surface 48 of portion 47 on either side of opening 46 to transmit the movement of lever 6 to body 45 when lever 6 is rotated about axis A towards plane π₄, and to prevent body 45 from being withdrawn from opening 46 in the opposite direction.

According to the present invention, second stop means 51 comprise a pair of flexible clips 57 projecting from respective edges 55 of body 45 at a distance from projections 54 slightly greater than the axial length of opening 46, and cooperating elastically with surface 49 of portion 47 on either side of opening 46. When lever 6 is positioned in plane π₄ and forced in a direction crosswise to plane π₄ and towards plane π₃, clips 57 permit a small amount of movement of lever 6 with respect to body 45, while at the same time retaining tooth 42 inside portion 36 of groove 34.

Spring 41 is fitted longitudinally along rod 14, and is interposed between the top surface of body 45 and a respective shoulder 60 (Figures 1, 2) of the ribbed structure of rod 14.

Device 1 operates as follows.

To select a gear, gear lever 6 is moved laterally to rotate lever 6, pin 22 integral with lever 6, and hence intermediate element 5 about axis A. When pin 22 is rotated about transverse axis A, spherical head 27 is moved up or down along an arc, and transmits motion to lever 28, which rotates about its hinge axis with respect to supporting element 2 to activate gear selection control cable 30.

On reaching the selected position represented by a respective selection plane π₁, π₂, π₃, π₄, the corresponding gear is engaged by moving lever 6 backwards or forwards in said plane, so as to rotate lever 6 about axis C and activate engagement control cable 18.

To engage reverse gear R, lever 6 is rotated about axis A towards plane π₄, while at the same time drawing collar 43 towards knob 16 to move element 40 into the raised enabling position, so that tooth 42 is inserted through opening 38 into portion 35 of groove 34; and lever 6 is then rotated about axis C, so that tooth 42 engages portion 36 of groove 34 to position and maintain lever 6 in plane π₄. In the event lever 6 is forced accidentally in a direction perpendicular to plane π₄ and towards plane π₃, clips 57 and arm 44 flex to permit rod 14 to slide with respect to body 45 of element 40, so that tooth 42 is retained inside groove 34 without undue stress, which is transmitted to clips 57 and to a portion 59 of arm 44.

The advantages of the shift device according to the present invention will be clear from the foregoing description.

In particular, in the event lever 6 is forced accidentally in reverse gear plane π₄, the elasticity of clips 57 and the flexibility of arm 44 provide for retaining tooth 42 inside groove 34, for absorbing the stress to which tooth 42 is subjected, and so preventing breakage of the tooth.

Clearly, changes may be made to device 1 as described and illustrated herein without, however, departing from the scope of the accompanying Claims.

In particular, clips 57 may be replaced by other flexible means interposed between element 40 and lever 6, e.g. one or more coil springs interposed between respective shoulders of body 45 and lever 6.

## Claims

1. A control device (1) for a vehicle transmission, comprising:
- supporting means (2) fittable to a vehicle body (3);
- a gear lever (6) connected to said supporting means (2) so as to rotate at least about a first and a second axis (A, C) substantially perpendicular to each other to respectively select and engage/disengage a gear;
- a first and a second engaging element (42, 34) located respectively on said gear lever (6) and said supporting means (2), and connectable to each other to permit said gear lever (6) to be positioned in a reverse gear plane (π₄) through said first axis (A), and to maintain said gear lever (6) in said plane (π₄);
characterized by comprising flexible means (57, 59) interposed between said first engaging element (42) and said gear lever (6), and which, when said gear lever (6) is positioned in said reverse gear plane (π₄), permit accidental forcing of the gear lever (6) in a forcing direction crosswise to said plane (π₄), while maintaining said engaging elements (42, 34) connected to each other.

2. A device as claimed in Claim 1, characterized by comprising a disabling element (40) for preventing accidental engagement of the reverse gear (R), and which comprises said first engaging element (42) and is fitted to said gear lever (6) so as to slide longitudinally between a lowered disabling position, wherein said first and said second engaging element (42, 34) interfere with each other as said gear lever (6) is rotated about said first axis (A) towards said reverse gear plane (π₄), and a raised enabling position, wherein said first and said second engaging element (42, 34) are connectable to each other as said gear lever (6) is rotated about said first axis (A); said device (1) comprising elastic means (41) interposed between said gear lever (6) and said disabling element (40) to maintain the disabling element (40) in said lowered disabling position.

3. A device as claimed in Claim 2, characterized in that said first engaging element is a tooth (42) on said disabling element (40), and said second engaging element is a seat (34) for said tooth (42), formed in said supporting means (2).

4. A device as claimed in Claim 3, characterized in that said seat comprises a substantially L-shaped groove (34), in turn comprising a first portion (35) crosswise to said reverse gear plane (π₄), and a second portion (36) perpendicular to said first portion (35) and parallel to said reverse gear plane (π₄); said first portion (35) of said groove (34) comprising a first opening (38) facing said gear lever (6) and for insertion of said tooth (42).

5. A device as claimed in any one of the foregoing Claims from 2 to 4, characterized in that said disabling element (40) comprises a body (45) crosswise to said gear lever (6), supporting said first engaging element (42), and fitted in sliding manner inside a through transverse second opening (46) formed in the gear lever (6); said device (1) comprising unilateral first stop means (50) acting on a first surface (48) of said gear lever (6) to transmit motion from said gear lever (6) to said body (45) as the gear lever (6) is rotated about said first axis (A) towards said reverse gear plane (π₄), and to prevent withdrawal of said body (45) from said second opening (46) in an opposite direction; said flexible means comprising flexible unilateral second stop means (51) acting on a second surface (49) of said gear lever (6), opposite said first surface (48), to permit, when said gear lever (6) is positioned in said reverse gear plane (π₄), relative movements of said gear lever (6) with respect to said body (45), due to accidental forcing of the gear lever (6) in said forcing direction.

6. A device as claimed in Claim 5, characterized in that said first stop means (50) comprise a pair of lateral projections (54) located on said body (45) and comprising respective contact edges (56) cooperating with said first surface (48) of said gear lever (6) on either side of said second opening (46).

7. A device as claimed in Claim 5 or 6, characterized in that said second stop means (51) comprise a pair of elastic clips (57) projecting from respective lateral edges (55) of said body (45) and resting against said second surface (49) of said gear lever (6) on either side of said second opening (46).

8. A device as claimed in any one of the foregoing Claims from 5 to 7, characterized in that said disabling element (40) comprises an actuating collar (43) fitted in axially sliding manner to said gear lever (6); and an arm (44) extending along said gear lever (6) from said collar (43); said body (45) projecting perpendicularly from the end of said am (44) opposite said collar (43); and said flexible means comprising at least a portion (59) of said arm (44).
